# EUROPÄISCHE PATENTSCHRIFT

(11) **EP 1 888 374 B1**
(45) Veröffentlichungstag und Bekanntmachung des Hinweises auf die Patenterteilung: **01.10.2008**
(21) Anmeldenummer: 06754134.2
(22) Anmeldetag: 06.06.2006
(51) Int. Cl.: B60R 16/02

(54) **ABDICHTELEMENT ZUR ABDICHTUNG EINES STRANGFÖRMIGEN KÖRPERS IN EINEM DURCHBRUCH EINER WAND**
SEALING ELEMENT FOR SEALING A STRAND-SHAPED BODY IN AN APERTURE OF A WALL
ELEMENT D'ETANCHEITE POUR REALISER L'ETANCHEITE D'UN CORPS EN FORME D'EXTRUDE, DANS UNE OUVERTURE D'UNE PAROI

(30) Priorität: 04.06.2005 DE 102005025780
(43) Veröffentlichungstag der Anmeldung: 20.02.2008
(73) Patentinhaber: LEONI Bordnetz-Systeme GmbH, 90402 Nürnberg (DE)
(72) Erfinder: PFISTER, Martin, 97357 Prichsenstadt (DE)
(74) Vertreter: Tergau & Pohl Patentanwälte
(86) Internationale Anmeldenummer: PCT/EP2006/005358
(87) Internationale Veröffentlichungsnummer: WO 2006/131298

(56) Entgegenhaltungen:
- EP-A- 1 010 584
- EP-A- 1 424 245
- US-A- 4 656 689
- US-A- 5 270 487

## Beschreibung

Die Erfindung betrifft ein Abdichtelement zur Abdichtung eines strangförmigen Körpers in einem Durchbruch einer Wand, insbesondere zur Abdichtung eines Kabelsatzes in einem Durchbruch eines Karosserieblechs, mit einer Tülle, durch die der strangförmige Körper geführt ist.

Allgemein besteht insbesondere im Kraftfahrzeugbereich das Problem der dichten Durchführung eines Kabelsatzes von einem Trockenbereich in einen Nassbereich, beispielweise vom Fahrzeuginnenraum in den Motorraum, in dem Spritzwasser auftritt.

Aus der DE 101 29 086 A1 ist eine Wanddurchführung zu entnehmen, die eine Tülle aufweist, durch die der strangförmige Körper geführt ist. Die Tülle umfasst einen um den strangförmigen Körper geschäumten Formkörper, sowie einen mit diesem einstückig ausgebildeten Befestigungsflansch. An dem Befestigungsflansch ist eine um den strangförmigen Körper umlaufende Dichtlippe angeformt, die im Montageendzustand gegen einen Öffnungsrand einer Wandöffnung gepresst ist. Zur Versteifung des Befestigungsflansches ist ein zweiteiliges Einlegeteil vorgesehen, das in den Befestigungsflansch eingeschoben ist. Auf der der Tülle abgewandten Seite des Öffnungsrands ist weiterhin ein Versteifungsrahmen vorgesehen. Ein einfaches seitliches Einführen des strangförmigen Körpers wird durch einen zur Wandöffnung führenden Einführschlitz gewährt.

Die EP 1 036 711 A2 beschreibt ebenfalls eine dichtende Wanddurchführung eines Kabelsatzes im Kraftfahrzeugbereich durch eine Wandöffnung. Dort ist eine zweiteilig ausgestaltete Tülle mit einem formstabilen Einsatz sowie ein elastischer Faltenbalg angegeben. Der formstabile Einsatz dient zur sicheren Befestigung am Karosserieblech und der Faltenbalg übernimmt insbesondere die Funktion des Spritzwasserschutzes. Die beiden Teile sind dabei über ein mechanisches Verbindungsmittel miteinander aufwändig verbunden und es ist eine komplizierte Montage der Tülle und eine Zugänglichkeit des Karosserieblechs von beiden Seiten erforderlich.
Das Dokument US-A-4656689 offenbart ein Abdichtelement gemäß dem Oberbegriff des Anspruchs 1.

Der Erfindung liegt die Aufgabe zugrunde, ein sicher abdichtendes Abdichtelement anzugeben, das aus wenigen Teilen ausgebildet ist und leicht montierbar ist.

Die Aufgabe wird erfindungsgemäß gelöst durch ein Abdichtelement mit den Merkmalen das Patentanspruchs 1. Danach weist das Abdichtelement eine Tülle mit einem durch sie hindurchgeführten strangförmigen Körper auf. Insbesondere wird hiermit eine dichtende Durchführung für einen Kabelsatz im Kraftfahrzeugbereich gebildet. Die Tülle umfasst eine einen insbesondere zylindrischen Hohlraum begrenzende Umfangswand. Ein Spannelement ist zum Verspannen der Tülle gegen den Durchbruch vorgesehen, dabei weitet sich die Tülle, insbesondere die Umfangswand, beim Verspannen auf. Die Umfangswand wird hierbei radial nach außen gegen einen Öffnungsrand des Durchbruchs gedrückt.

Ein wesentlicher Vorteil dieser Ausgestaltung ist darin zu sehen, dass eine besonders sichere und dauerhafte Abdichtung durch das Anpressen und Verspannen der Tülle gegen den Durchbruch gewährleistet ist. Die Tülle wird in den Durchbruch eingeführt und mit Hilfe von Druckkräften, die so gerichtet sind, dass sie eine radiale Expansion der Tülle hervorrufen, weitet sie sich aus und dichtet somit die Stellen des Kontakts zwischen ihr und der Wand sehr gut ab.

Um ein einfaches Aufweiten und eine sichere und dauerhafte Abdichtung zu ermöglichen ist die Tülle aus einem elastischen Material ausgebildet, insbesondere aus einem Schaummaterial wie PU-Schaum. Der strangförmige Körper ist insbesondere durch Umgießen, Umschäumen oder Spritzen eines Dichtmaterials auf ein Kabelbündel gebildet. Bei diesen Verfahren wird das Dichtmaterial aus einem flüssigen oder zähflüssigen Zustand in einen festeren Zustand überführt. Das Kabelbündel kann auch mit einem gummiartigen Werkstoff dicht ummantelt sein. Als Gieß- und Dichtmittel bieten sich insbesondere PU-Schaum, eine PU-Gußmasse oder auch eine Kautschuk- oder Gummimasse oder ein sogenanntes Hot-melt an. Die dichte Umwandung des Körpers ist bevorzugt Teil der als einstückiger Formkörper ausgebildeten Tülle.

Der in der Tülle ausgebildete insbesondere zylindrische Hohlraum hat dabei eine positive Auswirkung auf die Flexibilität der Tülle. Ein zum Spannelement offener Hohlraum bietet die Möglichkeit, die Druckkräfte innenseitig entlang der Umfangswand auswärts wirken zu lassen. Somit wird eine erhöhte Druckwirkung in radialer Richtung, bzw. ein effektiveres Aufweiten der Tülle erzielt. Das Vorhandensein eines Hohlraums in der Tülle erhöht dabei die Flexibilität der Tülle. Der Hohlraum ist bevorzugt in Form eines ovalen, insbesondere kreisförmigen Zylinders gebildet. Ein durch die Umfangswand ausgebildeter kreisförmiger Zylinder hat den Vorteil, dass wegen der symmetrischen Geometrie unter der Wirkung der Druckkräfte sich das Material gleichmäßig ausdehnt und somit wird die Kerbwirkung dieser Kräfte reduziert.

Für das Aufweiten der Tülle weist das Spannelement einen Ansatz auf, der zum Aufweiten der Tülle in den Hohlraum der Tülle eingreift. Der Ansatz ist derart ausgestaltet und dimensioniert, dass er nach dem Einführen in den Hohlraum mindestens gegen einen Teil der Umfangswand drückt. Am wirkungsvollsten ist ein großflächiges Pressen der Tülle in radialer Richtung.

Für das Aufweiten der Tülle ist weiterhin der zylindrische Hohlraum vom Spannelement aus in Axialrichtung betrachtet konvergent oder kegelförmig ausgebildet. Alternativ oder ergänzend ist auch der Ansatz konvergent oder kegelförmig ausgebildet. Eine vom Spannelement aus betrachtet ebenfalls konvergente Form der Umfangswand ist dabei nicht zwingend erforderlich. Zum Ausbilden eines konvergenten Hohlraums reicht es aus, wenn die Dicke der Umfangswand fortlaufend und stetig zunimmt, so dass die Innenseite der Umfangswand einen Kegel bildet. Eine kegelförmig ausgebildete Innenseite vergrößert die Oberfläche der Umfangswand, auf die der vom Spannelement, insbesondere vom Ansatz des Spannelements erzeugte Druck wirkt. Eine gegenüber der Drehachse der Tülle geneigte Innenseite der Umfangswand hat in Anbetracht des vektoriellen Charakters der Kräfte einen weiteren Vorteil: Da die vektorielle Kraft beim Pressen sowohl aus einer axialen als auch einer radialen Komponente besteht, wird automatisch eine Kraftwirkung in Radialrichtung erzeugt.

Um ein besonders wirkungsvolles Zusammenwirken zwischen dem Ansatz und der Umfangswand der Tülle zu erzielen und somit die Kräfte in Radialrichtung zu verstärken sind die Abmessungen und Form des Ansatzes insbesondere an die Abmessungen und Form des Hohlraums angepasst. Dadurch kann der Ansatz auf die gesamte Innenoberfläche der Umfangswand aufgelegt werden und so großflächig auf die Umfangswand wirken. Der Durchmesser an der Kegelspitze des Ansatzes ist insbesondere etwas größer als der Durchmesser am Kegelgrund des Hohlraums, gleichzeitig weisen der Hohlraum und der Ansatz gleiche Kegelwinkel auf, so dass beim Einführen des Ansatzes in den Hohlraum eine radiale Aufweitung der Tülle verursacht wird.

Zur Erzielung einer möglichst hohen Stabilität der Verbindung zwischen dem Abdichtelement und der Wand, weist die Tülle vorzugsweise einen Kragen zum Auflegen auf einen Öffnungsrand des Durchbruchs auf. Durch die hohe Formstabilität ist sichergestellt, dass der Kragen der Tülle in allen Bereichen um den Durchbruch herum dicht am Öffnungsrand anliegt. Ein weiterer Vorteil dieser Ausgestaltung ist, dass die Tülle nur im Bereich des Kragens einen Durchmesser aufweist, der größer ist als der Durchmesser des Durchbruchs. Somit ist ein Hintergreifen des Öffnungsrands durch die Tülle nicht erforderlich, sondern die Tülle wird lediglich in den Durchbruch eingesteckt und kragenseitig mit dem Spannelement an der Wand befestigt.

Ein weiterer wesentlicher Vorteil dieser Ausgestaltung ist, dass zur Befestigung des Abdichtelements nach dem Durchführen durch den Durchbruch nur einer Seite des Karosserieblechs ein Zugang erforderlich ist. Die Tülle wird dabei in den Durchbruch eingeführt und mittels eines Spannelements auf der einen Seite der Wand verspannt. Ein Zugang zur gegenüberliegenden Seite der Wand ist dabei nicht zwingen erforderlich.

Ein weiteres bevorzugtes Merkmal des Abdichtelements ist, dass das Spannelement insbesondere den gesamten Kragen der Tülle überdeckt. Einerseits ist somit die Entstehung von undichten Stellen zwischen dem Kragen und dem Öffnungsrand ausgeschlossen. Andererseits sorgt eine vollständige Überdeckung des Kragens vom Spannelement für eine gleichmäßige Verteilung der Druckkräfte.

Weiterhin bevorzugt weist das Spannelement ein Haltelement zum Halten der Tülle am Spannelement auf. Dadurch können die Tülle und das Spannelement noch vor dem Fixieren an der Wand unverlierbar zusammengebaut und als eine das Abdichtelement bildende einstückige Montageeinheit betrachtet und eingesetzt werden.

Zweckdienlicherweise weist das Spannelement einen Abstandhalter in Richtung zur Tülle auf. Mit diesem stützt sich das Spannelement im montierten Zustand an der Wand ab.

Zur Montagevereinfachung ist der Abstandhalter vorzugsweise als Führungshülse für die Durchführung eines Befestigungselements ausgebildet. Das Befestigungselement ist insbesondere als eine Schraube oder als ein Schraubbolzen ausgebildet. Mittels mehrerer Schrauben ist eine sehr stabile kraftschlüssige Verbindung zwischen dem Abdichtelement und der Wand erzielbar, mit der die Tülle dicht am Öffnungsrand um den Durchbruch herum angepresst ist. Anstelle der Schraubverbindung sind auch andere Verbindungen möglich, z. B. eine Nietverbindung oder eine formschlüssige Verbindung über beispielsweise einen Bajonettverschluss.

Vorteilhafterweise ist die Länge des Abstandhalters in Axialrichtung kürzer als die entsprechende Länge des Ansatzes. Somit erstreckt sich der Ansatz über den Durchbruch zur gegenüberliegenden Seite der Wand hin. Beim Einziehen presst er die Tülle in Radialrichtung und ruft eine Aufweitung der Tülle hervor, bevor die axiale Verschiebung des Ansatzes durch den Anschlag begrenzt wird. Dabei wird die Umfangswand der Tülle gegen die Wand drückt und gewährt somit eine sichere und effektive Abdichtung des Durchbruchs.

Ausführungsbeispiele der Erfindung werden im Folgenden anhand der Zeichnung näher erläutert. Es zeigen:
- Fig. 1: eine perspektivische teilweise aufgeschnittene Ansicht eines strangförmigen Körpers mit einer Tülle,
- Fig. 2: eine perspektivische Teilansicht eines Abdichtelements umfassend ein Spannelement und eine daran befestigte Tülle gemäß Fig. 1,
- Fig. 3: einen Teillängsschnitt durch eine Seitenansicht des in einen Durchbruch eingeführtes Abdichtelements gemäß Fig. 2,
- Fig. 3a: eine perspektivische Ansicht auf das in Fig. 3 gezeigte Abdichtelement, und
- Fig. 4: das in Fig. 3 gezeigten Abdichtelement im montierten Zustand.

In den Figuren sind gleich wirkende Teile mit den gleichen Bezugszeichen versehen.

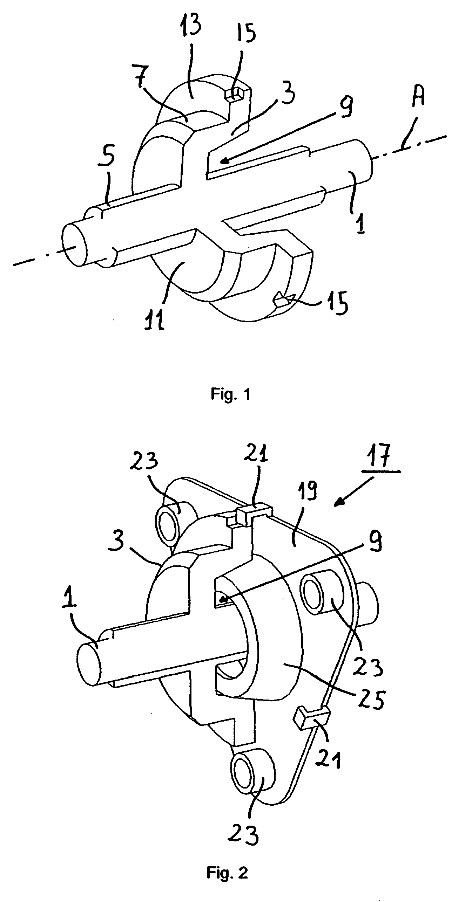

In Fig. 1 ist ein strangförmiger Körper 1 mit einer angeformten Tülle 3 und einer Führung 5 dargestellt. Der strangförmige Körper 1 ist insbesondere ein mit PU-Schaum umschäumtes Kabelbündel und bildet zusammen mit der Tülle 3 und mit der Führung 5 einen Teil eines Kabelsatzes. Die Tülle 3 und die Führung 5 sind einstückig gebildet.

Die Tülle 3 weist eine Umfangswand 7 auf, die einen Hohlraum 9 in Form eines Kreiszylinders mit einer Drehachse A abgrenzt. Der Hohlraum 9 ist von einer Seite offen und die gegenüberliegende Seite weist eine Wandung 11 auf. Der Hohlraum 9 ist in Richtung der Wandung 11 konvergent ausgebildet. Um die Umfangswand 7 herum ist ein Kragen 13 gebildet. Im Kragen 13 sind Vertiefungen 15 eingebracht.

Beim Umschäumen des Kabelbündels mit PU-Schaum dringt das schäumbare Material in die Zwischenräume zwischen den Einzelleitungen des Kabelbündels ein und verschließt diese dicht. Dadurch kann kein kapillarer Effekt auftreten und der Kabelsatz ist längswasserdicht.

Fig. 2 zeigt ein Abdichtelement 17 umfassend ein Spannelement 19 und die daran befestigte Tülle 3. Das Spannelement 19 weist Haltelemente 21 auf, die in die Vertiefungen 15 gemäß Fig. 1 eingreifen im Ausführungsbeispiel eine formschlüssige Verbindung nach Art eines Bajonettverschlusses zwischen dem Spannelement 19 und der Tülle 3 bilden. Das Spannelement 19 weist eine dreieckige Form mit gerundeten Ecken auf. Im Bereich der Ecken sind Abstandhalter 13 angebracht, die als Führungshülsen ausgebildet sind. Das Spannelement 19 weist weiterhin einen Ansatz 25 auf, der nach Art eines kegelförmigen Hohlzylinders ausgebildet ist und durch den der strangförmige Körper 1 durchgeführt ist. Die Größe des Ansatzes 25 ist an die Größe des Hohlraums 9 der Tülle 3 angepasst.

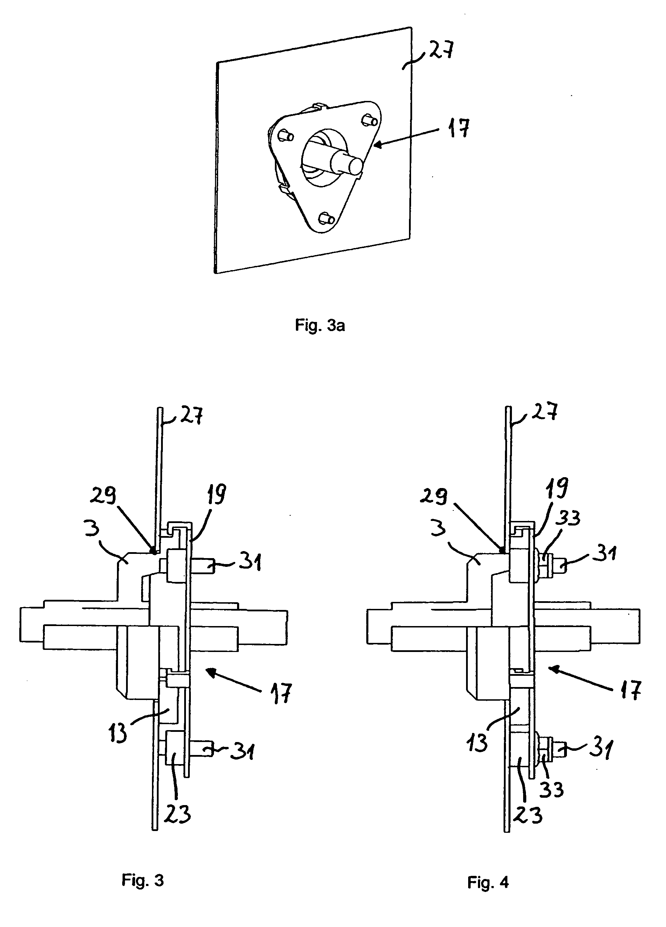

In Fig. 3, Fig. 3a und Fig. 4 sind zwei Montageschritte der Montage des Abdichtelements 17 an einer Wand 27 dargestellt. Die Wand 27 weist einen Durchbruch 29 mit einem kreisförmigen Querschnitt auf, in den die Tülle 3 eingesteckt ist. Die Wand 27 weist außerdem in der Nähe des Durchbruchs 29 drei Befestigungselemente 31 auf, die insbesondere als Schraubbolzen ausgebildet sind.

Bei der Montage wird die Tülle 3 in den Durchbruch 29 von einer Montageseite eingeführt. Dabei werden die Befestigungselemente 31 durch die Abstandhalter 23 des Spannelements 19 geführt. Die Tülle 3 wird so weit in den Durchbruch 29 eingeführt, bis der Kragen 13 dicht um den Durchbruch 29 herum aufliegt. Beim Montageschritt gemäß Fig. 3 ist der Kragen 13 aufgelegt, das Spannelement 19 ist aber noch nicht mit der Wand 27 verschraubt.

In Fig. 3a ist noch mal das montierte Abdichtelement 17 an der Wand 27 in einer perspektivischen Ansicht dargestellt.

In Fig. 4 ist die Situation dargestellt, bei der das Spannelement mittels Schraubenmuttern 33 an den Befestigungselementen 31 angeschraubt ist. Die Schraubenmuttern 33 werden beim Verschrauben so lange angezogen, bis die Abstandhalter 23 sich an der Wand 27 stützen. Da der Ansatz 25 länger ist als die Abstandhalter 23 wird er weiter in den Hohlraum 9 eingeschoben und verursacht eine radiale Aufweitung der Umfangswand 7. Die Umfangswand 7 wird dabei fest gegen die Wand 27 gepresst und dichtet somit die Kontaktstellen ab. Der Ansatz 25 verhindert außerdem eine Rückfederung des elastischen Materials der Umfangswand 7.

Diese einfache Montage und sichere Befestigung mittels kraftschlüssiger Verbindungen gewährleistet eine besonders gute Abdichtung des Durchbruchs 29 und somit einen dauerhaften störungsfreien Einsatz des Abdichtelements 17.

### Bezugszeichenliste

strangförmiger Körper
- 3: Tülle
- 5: Führung
- 7: Umfangswand
- 9: Hohlraum
- 11: Wandung
- 13: Kragen
- 15: Vertiefungen
- 17: Abdichtelement
- 19: Spannelement
- 21: Haltelement
- 23: Abstandhalter
- 25: Ansatz
- 27: Wand
- 29: Durchbruch
- 31: Befestigungselement
- 33: Schraubenmutter
- A: Drehachse der Tülle

## Patentansprüche

1. Abdichtelement (17) zur Abdichtung eines strangförmigen Körpers (1) in einem Durchbruch (29) einer Wand (27) , insbesondere zur Abdichtung eines Kabelsatzes in einem Durchbruch (29) eines Karosserieblechs, mit einer Tülle (3), durch die der strangförmige Körper (1) geführt ist,
**dadurch gekennzeichnet,**
**dass** die Tülle (3) eine einen Hohlraum (9) abgrenzende Umfangswand (7) umfasst, dass ein Spannelement (19) zum Verspannen der Tülle (3) gegen den Durchbruch (29) mit einem Ansatz (25) in den Hohlraum (9) hineinreicht und der Ansatz (25) und/oder der Hohlraum (9) kegelförmig ausgebildet sind derart, dass beim Verspannen mit dem Spannelement (19) der Ansatz (25) in den Hohlraum (9) eingepresst wird, so dass die Umfangswand (7) im Bereich der kegelförmigen Ausgestaltung radial gegen den Durchbruch (29) verspannt sind.

2. Abdichtelement (17) nach Anspruch 1,
**dadurch gekennzeichnet,**
**dass** die Tülle (3) einen Kragen (13) zum Auflegen auf einen Öffnungsrand des Durchbruchs (29) aufweist.

3. Abdichtelement (17) nach Anspruch 2,
**dadurch gekennzeichnet,**
**dass** das Spannelement (19) den Kragen (13) der Tülle (3) überdeckt.

4. Abdichtelement (17) nach einem der vorhergehenden Ansprüche,
**dadurch gekennzeichnet,**
**dass** das Spannelement (19) ein Haltelement (21) zum Halten der Tülle (3) am Spannelement (19) aufweist.

5. Abdichtelement (17) nach einem der vorhergehenden Ansprüche,
**dadurch gekennzeichnet,**
**dass** das Spannelement (19) einen Abstandhalter (23) in Richtung zur Tülle (3) aufweist.

6. Abdichtelement (17) nach Anspruch 5,
**dadurch gekennzeichnet,**
**dass** der Abstandhalter (23) als Führungshülse für die Durchführung eines Befestigungselements (31) ausgebildet ist.

7. Abdichtelement (17) nach Anspruch 5 oder 6,
**dadurch gekennzeichnet,**
**dass** die Länge des Abstandhalters (23) in Axialrichtung kürzer ist als die entsprechende Länge des Ansatzes (25).

8. Abdichtelement (17) nach Anspruch 5 oder 6,
**dadurch gekennzeichnet,**
die Tülle (3) aus einem elastischen Material und das Spannelement (19) aus einem formstabilen Material besteht.

## Claims

1. Sealing element (17) for sealing a strand-like body (1) in an aperture (29) in a wall (27), in particular for sealing a cable harness in an aperture (29) in a body panel, having a nozzle (3) through which the strand-like body (1) is passed, **characterized in that** the nozzle (3) comprises a circumferential wall (7) which bounds a hollow space (9), **in that** a clamping element (19) for bracing the nozzle (3) against the aperture (29) extends into the hollow space (9) by way of a projection (25), and the projection (25) and/or the hollow space (9) are of conical design in such a way that the projection (25) is pressed into the hollow space (9) when they are braced by the clamping element (19), so that the circumferential wall (7) is braced radially against the aperture (29) in the region of the conical formation.

2. Sealing element (17) according to Claim 1,
**characterized in that** the nozzle (3) has a collar (13) for resting on an opening edge of the aperture (29).

3. Sealing element (17) according to Claim 2,
**characterized in that** the clamping element (19) covers the collar (13) of the nozzle (3).

4. Sealing element (17) according to one of the preceding claims, **characterized in that** the clamping element (19) has a retaining element (21) for retaining the nozzle (3) on the clamping element (19).

5. Sealing element (17) according to one of the preceding claims, **characterized in that** the clamping element (19) has a spacer (23) in the direction of the nozzle (3).

6. Sealing element (17) according to Claim 5,
**characterized in that** the spacer (23) is in the form of a guide sleeve for a fixing element (31) to pass through.

7. Sealing element (17) according to Claim 5 or 6, **characterized in that** the length of the spacer (23) in the axial direction is shorter than the corresponding length of the projection (25).

8. Sealing element (17) according to Claim 5 or 6, **characterized in that** the nozzle (3) is composed of an elastic material and the clamping element (19) is composed of a dimensionally stable material.

## Revendications

1. Élément d'étanchéité (17) pour étancher un corps en forme de tige (1) dans une traversée (29) une paroi (27), en particulier pour étancher un faisceau de câbles dans une traversée (29) d'une tôle de carrosserie, comprenant un passe-câble (3) à travers lequel est passé le corps en forme de tige (1),
**caractérisé en ce que** le passe-câble (3) comprend une paroi périphérique (7) délimitant une cavité (9), **en ce qu'**un élément de serrage (19) destiné à serrer le passe-câble (3) contre la traversée (29) pénètre dans la cavité (9) au moyen d'un talon (25), et le talon (25) et/ou la cavité (9) sont réalisés sous forme conique de telle façon que lors du serrage avec l'élément de serrage (19) le talon (25) est pressé à force dans la cavité (9) de sorte que la paroi périphérique (7) est serrée radialement contre la traversée (29) dans la zone de la réalisation de forme conique.

2. Élément d'étanchéité (17) selon la revendication 1,
**caractérisé en ce que** le passe-câble (3) comporte une collerette (13) destinée à s'appliquer sur un bord de l'ouverture de la traversée (29).

3. Élément d'étanchéité (17) selon la revendication 2,
**caractérisé en ce que** l'élément de serrage (19) recouvre la collerette (13) du passe-câble (3).

4. Élément d'étanchéité (17) selon l'une des revendications précédentes,
**caractérisé en ce que** l'élément de serrage (19) comprend un élément de maintien (21) pour maintenir le passe-câble (3) sur l'élément de serrage (19).

5. Élément d'étanchéité (17) selon l'une des revendications précédentes,
**caractérisé en ce que** l'élément de serrage (19) comprend un espaceur (23) en direction du passe-câble (3).

6. Élément d'étanchéité (17) selon la revendication 5,
**caractérisé en ce que** l'espaceur (23) est réalisé sous forme de douille de guidage pour la traversée d'un élément de fixation (31).

7. Élément d'étanchéité (17) selon la revendication 5 ou 6,
**caractérisé en ce que** la longueur de l'espaceur (23) en direction axiale est plus courte que la longueur correspondante du talon (25).

8. Élément d'étanchéité (17) selon la revendication 5 ou 6,
**caractérisé en ce que** le passe-câble (3) est en un matériau élastique et l'élément de serrage (19) est en un matériau stable quant à sa forme.
